Europäisches Patentamt

European Patent Office

Office européen des brevets

(19)

(11) **EP 1 388 817 A1**

(12) **EUROPEAN PATENT APPLICATION**

(43) Date of publication:
**11.02.2004 Bulletin 2004/07**

(51) Int Cl.$^7$: **G06T 5/20**

(21) Application number: **03254892.7**

(22) Date of filing: **06.08.2003**

(84) Designated Contracting States:
**AT BE BG CH CY CZ DE DK EE ES FI FR GB GR HU IE IT LI LU MC NL PT RO SE SI SK TR**
Designated Extension States:
**AL LT LV MK**

(30) Priority: **08.08.2002 JP 2002231193**

(71) Applicant: **GE Medical Systems Global Technology Company LLC Waukesha, Wisconsin 53188-1696 (US)**

(72) Inventor: **Nishide, Akihiko Tokyo 191-8503 (JP)**

(74) Representative: **Pedder, James Cuthbert London Patent Operation, General Electric International, Inc., 15 John Adam Street London WC2N 6LU (GB)**

(54) **Three-dimensional spatial filtering apparatus and method**

(57) For the purpose of conducting three-dimensional spatial filtering with coefficients dependent upon a pixel value throughout a three-dimensional image, in conducting filtering on the three-dimensional image by a three-dimensional spatial filter, coefficients of the three-dimensional spatial filter are changed according to a property of a pixel value of the three-dimensional image. The property of the pixel value is represented by the pixel-of-interest value, the average pixel value, maximum pixel value, minimum pixel value, or median pixel value of the pixel-of-interest and its neighboring pixels, or the property of the pixel value, the sum of absolute values or the square sum of the differences between pixel values of the pixel-of-interest value and the other pixels.

## FIG. 8

START

Initialization :
x = 0, Y = 0, Z = 0 — 702

Readout of pixel values of pixel-of-interest and its neighboring pixels — 704

Property determination — 706

Setting of three-dimensional spatial filter coefficients — 708

Convolution: $G_1(x, y, z) = G_0(x, y, z) + f$ (value) where value = $G_0(x, y, z)$ — 710

Write $G_1(x, y, z)$ into memory region for output image — 712

x = x + 1 — 714

No — x = N ? — 716

Yes

x = 0, y = y + 1 — 718

No — y = N ? — 720

Yes

x = 0, y = 0, z = z + 1 — 722

No — z = N ? — 724

Yes

END

**EP 1 388 817 A1**

**Description**

The present invention relates to a three-dimensional spatial filtering apparatus and method, and more particularly to a three-dimensional spatial filtering apparatus and method for conducting three-dimensional spatial filtering on a three-dimensional image.

Three-dimensional spatial filtering is conducted on a three-dimensional image for improvement of image quality of the three-dimensional image, for example. Several types of the three-dimensional spatial filtering include, for example, low-pass filtering, edge enhancement, and correlation detecting filtering. The three-dimensional spatial filtering is achieved by scanning image data by a three-dimensional spatial filter and superposing them on each other. The superposition is sometimes referred to as convolution. Weighting factors for the convolution are sometimes referred to as filter coefficients.

Conventionally, the filter coefficients for the three-dimensional spatial filtering are fixed at predetermined values. Thus, low-pass filtering, for example, is applied at a uniform strength throughout a three-dimensional image.

When the three-dimensional image is comprised of a plurality of tomographic images obtained by, for example, an X-ray CT (computed tomography) apparatus, then in the case where the tomographic images are of low-dose X-rays, noise contained in the images may be larger in a portion having a larger pixel value. This results from the fact that the pixel value is represented by a CT number. Specifically, since the CT number is a numerical value indicating attenuation of X-rays, a larger pixel value represents weaker X-rays having a poorer S/N (signal-to-noise ratio) and increased noise.

When, for example, conducting low-pass filtering as three-dimensional spatial filtering with fixed filter coefficients on a three-dimensional image of the foregoing nature, filtering suitable for a portion having a larger pixel value and a poorer S/N is excessive for a portion having a smaller pixel value and a better S/N. On the other hand, filtering for a portion having a smaller pixel value and a better S/N is insufficient for a portion having a larger pixel value and a poorer S/N. Such a case is one in which suitable filtering cannot be achieved throughout a three-dimensional image.

The present invention therefore seeks to provide a three-dimensional spatial filtering apparatus and method for suitably conducting three-dimensional spatial filtering throughout a three-dimensional image even if it has a varying property dependent upon a pixel value.

(1) The present invention, in accordance with one aspect for solving the aforementioned problem, is a three-dimensional spatial filtering apparatus for conducting filtering on a three-dimensional image by a three-dimensional spatial filter, characterized in comprising: coefficient adapting means for changing coefficients of said three-dimensional spatial filter according to a property of a pixel value in said three-dimensional image.

(2) The present invention, in accordance with another aspect for solving the aforementioned problem, is a three-dimensional spatial filtering method for conducting filtering on a three-dimensional image by a three-dimensional spatial filter, characterized in comprising: adapting coefficients of said three-dimensional spatial filter according to a property of a pixel value in said three-dimensional image.

In the invention of the aspects described in (1) and (2), since coefficients of a three-dimensional spatial filter are changed according to a property of a pixel value in a three-dimensional image, the three-dimensional spatial filtering can be suitably achieved throughout a three-dimensional image.

Preferably, said property is a pixel value of a pixel-of-interest in the three-dimensional image convoluted with the filter, insofar as the value of the pixel-of-interest is to take effect on the filter coefficients.

Preferably, said property is an average value of pixel values of the pixel-of-interest in the three-dimensional image convoluted with the filter and its neighboring pixels, insofar as the average value of pixel values of the pixel-of-interest and its neighboring pixels is to take effect on the filter coefficients.

Preferably, said property is a maximum value of pixel values of the pixel-of-interest in the three-dimensional image convoluted with the filter and its neighboring pixels, insofar as the maximum value of pixel values of the pixel-of-interest and its neighboring pixels is to take effect on the filter coefficients.

Preferably, said property is a minimum value of pixel values of the pixel-of-interest in the three-dimensional image convoluted with the filter and its neighboring pixels, insofar as the minimum value of pixel values of the pixel-of-interest and its neighboring pixels is to take effect on the filter coefficients.

Preferably, said property is a median value of pixel values of the pixel-of-interest in the three-dimensional image convoluted with the filter and its neighboring pixels, insofar as the median value of pixel values of the pixel-of-interest and its neighboring pixels is to take effect on the filter coefficients.

Preferably, said property is a maximum value of absolute values of differences between a pixel value of the pixel-of-interest in the three-dimensional image convoluted with the filter and pixel values of its neighboring pixels, insofar as the maximum value of absolute values of differences between pixel values of the pixel-of-interest and its neighboring pixels is to take effect on the filter coefficients.

Preferably, said property is a maximum value of squares of differences between a pixel value of the pixel-of-interest in the three-dimensional image convoluted with the filter and pixel values of its neighboring pixels, insofar as the maximum value of squares of differences between pixel values of the pixel-of-interest and its neighboring pixels is to take effect on the filter coefficients.

Preferably, said property is a minimum value of absolute values of differences between a pixel value of the pixel-of-interest in the three-dimensional image convoluted with the filter and pixel values of its neighboring pixels, insofar as the minimum value of absolute values of differences between pixel values of the pixel-of-interest and its neighboring pixels is to take effect on the filter coefficients.

Preferably, said property is a minimum value of squares of differences between a pixel value of the pixel-of-interest in the three-dimensional image convoluted with the filter and pixel values of its neighboring pixels, insofar as the minimum value of squares of differences between pixel values of the pixel-of-interest and its neighboring pixels is to take effect on the filter coefficients.

Preferably, said property is a median value of absolute values of differences between a pixel value of the pixel-of-interest in the three-dimensional image convoluted with the filter and pixel values of its neighboring pixels, insofar as the median value of absolute values of differences between pixel values of the pixel-of-interest and its neighboring pixels is to take effect on the filter coefficients.

Preferably, said property is a median value of squares of differences between a pixel value of the pixel-of-interest in the three-dimensional image convoluted with the filter and pixel values of its neighboring pixels, insofar as the median value of squares of differences between pixel values of the pixel-of-interest and its neighboring pixels is to take effect on the filter coefficients.

Preferably, the coefficients of the three-dimensional spatial filter are adapted depending upon, as said property, a property of a pixel value of the pixel-of-interest in the three-dimensional image convoluted with the filter, insofar as the property of the pixel value is to take effect on the filter coefficients.

It may sometimes be preferable from the point of reflecting the property of the pixel value in the filter coefficients to employ the standard deviation of the pixel-of-interest in the three-dimensional image convoluted with the filter and its neighboring pixels as one indicator of said property.

It may sometimes be preferable from the point of reflecting the properties of the pixel-of-interest and its neighboring pixels in the filter coefficients to employ a sum of absolute values of differences between a pixel value of the pixel-of-interest in the three-dimensional image convoluted with the filter and pixel values of its neighboring pixels as an indicator of said property.

It may sometimes be preferable from the point of reflecting the properties of the pixel-of-interest and its neighboring pixels in the filter coefficients to employ a square sum of differences between a pixel value of the pixel-of-interest in the three-dimensional image convoluted with the filter and pixel values of its neighboring pixels as an indicator of said property.

Therefore, the present invention can provide a three-dimensional spatial filtering apparatus and method for conducting three-dimensional spatial filtering with coefficients dependent upon a pixel value.

The invention will now be described in greater detail, by way of example, with reference to the drawings, in which:-

Figure 1 is a block diagram of an exemplary apparatus in accordance with one embodiment of the present invention.

Figure 2 is a block diagram of an image processing section.

Figure 3 is a conceptual diagram of three-dimensional image data.

Figure 4 is a conceptual diagram of a three-dimensional spatial filter.

Figure 5 is a conceptual diagram of a convolution filter.

Figure 6 is a diagram showing an exemplary coefficient setting in the three-dimensional spatial filter.

Figure 7 is a diagram showing an exemplary coefficient setting in the three-dimensional spatial filter.

Figure 8 is a flow chart of an operation of the exemplary apparatus in accordance with one embodiment of the present invention.

Figure 9 is a diagram showing an exemplary coefficient setting in the three-dimensional spatial filter.

Figure 10 is a diagram showing an exemplary coefficient setting in the three-dimensional spatial filter.

Figure 11 is a diagram showing an exemplary coefficient setting in the three-dimensional spatial filter.

Figure 12 is a diagram showing an exemplary coefficient setting in the three-dimensional spatial filter.

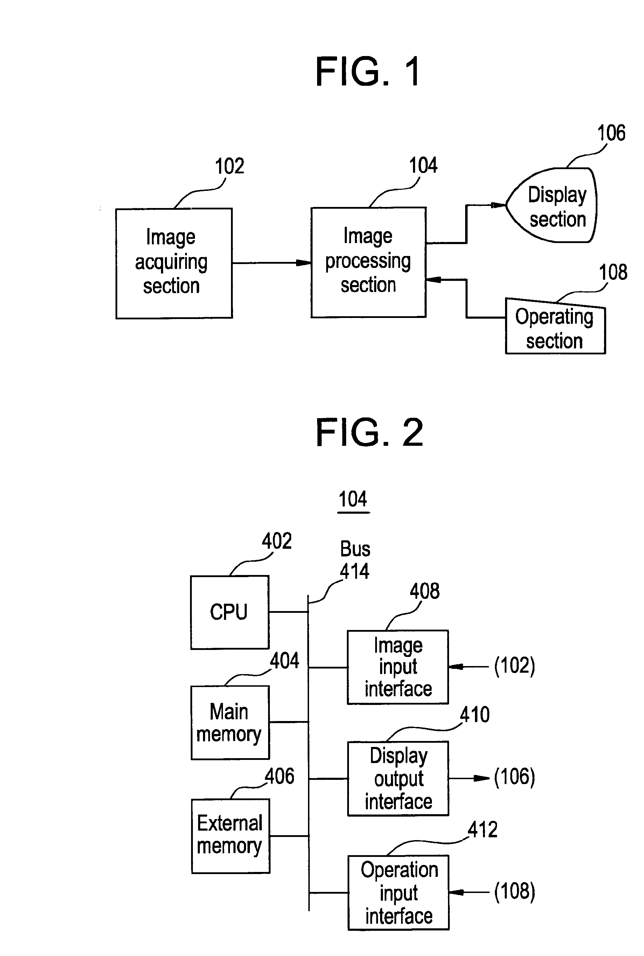

Embodiments of the present invention will now be described in detail with reference to the accompanying drawings. Figure 1 shows a block diagram of a three-dimensional spatial filtering apparatus. The apparatus is one embodiment of the present invention. The configuration of the apparatus represents an embodiment of the apparatus in accordance with the present invention. The operation of the apparatus represents an embodiment of the method in accordance with the present invention.

As shown in Figure 1, the present apparatus has an image acquiring section 102. The image acquiring section 102 is for acquiring a three-dimensional image of a certain subject. The image acquiring section 102 employed is, for example, an X-ray CT apparatus. The X-ray CT apparatus captures a plurality of tomographic images of the subject by a helical scan or the like, that is, captures a three-dimensional image.

Instead of an X-ray CT apparatus, the image acquiring section 102 may be a magnetic resonance imaging (MRI) apparatus or an ultrasonic imaging apparatus, or a three-dimensional imaging apparatus for a non-medical application such as non-destructive inspection or physical phenomenon analysis, e.g., an industrial X-ray CT apparatus or laminography apparatus.

The three-dimensional image acquired by the image acquiring section 102 is input to an image processing section 104. The image processing section 104 conducts three-dimensional spatial filtering on the input three-dimensional image. The image processing section 104 is connected with a display section 106 and an operating section 108 so that a user can interactively operate the image processing section 104 therethrough as needed.

The image processing section 104 is comprised of, for example, a computer. Figure 2 shows an exemplary configuration of the image processing section 104 as a block diagram. As shown, the image processing section 104 is comprised of a CPU (central processing unit) 402, a main memory 404, an external memory 406, an image input interface 408, a display output interface 410, and an operation input interface 412, all connected with one another via a bus 414.

The image input interface 408 is connected with the image acquiring section 102. The display output interface 410 is connected with the display section 106. The operation input interface 412 is connected with the operating section 108.

The external memory 406 stores a program for operating the CPU 402. The CPU 402 reads the program into the main memory 404 and executes it to achieve predefined functions as the image processing section 104.

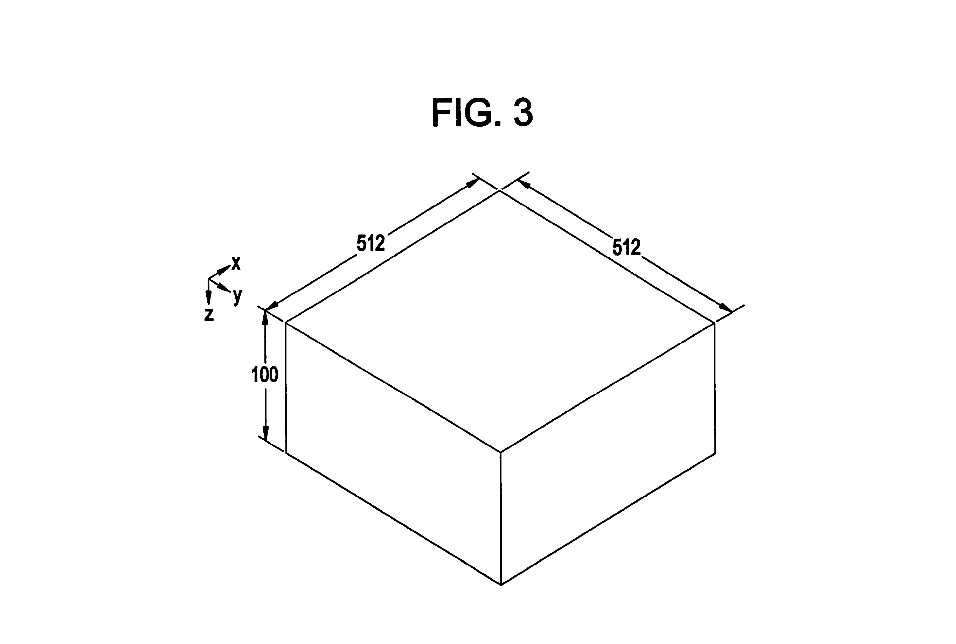

The external memory 406 also stores three-dimensional image data gathered from the image acquiring section 102 via the image input interface 408. Figure 3 is a conceptual diagram of the three-dimensional image data stored in the external memory 406. As shown, the three-dimensional image data forms a three-dimensional pixel matrix.

When directions of three axes of the three-dimensional pixel matrix are represented as x, y and z, the matrix size is, for example, 512 pixels both in the x- and y-directions and 100 pixels in the z-direction. That is, it is a $512 \times 512 \times 100$ matrix. The matrix corresponds to a set of 100 consecutive slices of tomographic images each having $512 \times 512$ pixels.

The three-dimensional image is subjected to three-dimensional spatial filtering by the CPU 402. The three-dimensional spatial filtering is carried out by convoluting the image data with a three-dimensional spatial filter.

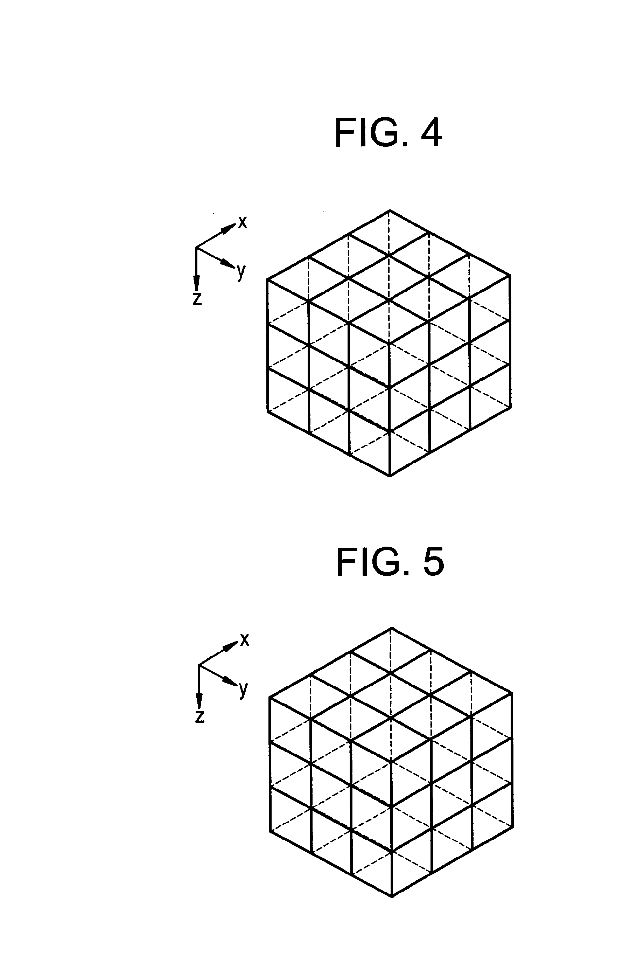

Figure 4 shows an example of the three-dimensional spatial filter. As shown, the three-dimensional spatial filter has coefficients arranged in a $3 \times 3 \times 3$ configuration. It should be noted that the size of the three-dimensional spatial filter is not limited to $3 \times 3 \times 3$ but may be an appropriate one such as $5 \times 5 \times 5$ or $7 \times 7 \times 7$, or $2 \times 2 \times 2$ or $4 \times 4 \times 4$. Moreover, instead of the size being equilateral in the x-, y- and z-directions, it can be unequilateral.

Filter coefficients are defined for the three-dimensional spatial filter. The three-dimensional spatial filter is sometimes referred to as a convolution filter.

Figure 5 shows an example of the convolution filter.

As shown, the convolution filter performs a convolution calculation in a one-to-one correspondence with each pixel in a local region having the same size. At each pixel position, a coefficient is disposed. Such convolution filter coefficients are stored in the external memory 406 beforehand.

The three-dimensional spatial filtering is an operation of scanning an image with the convolution filter and calculating a value by a product-sum operation on the convolution filter and the pixel values of the corresponding pixels. Thus, an image of results of the convolution product-sum operation by the convolution filter is obtained. This operation is the three-dimensional spatial filtering.

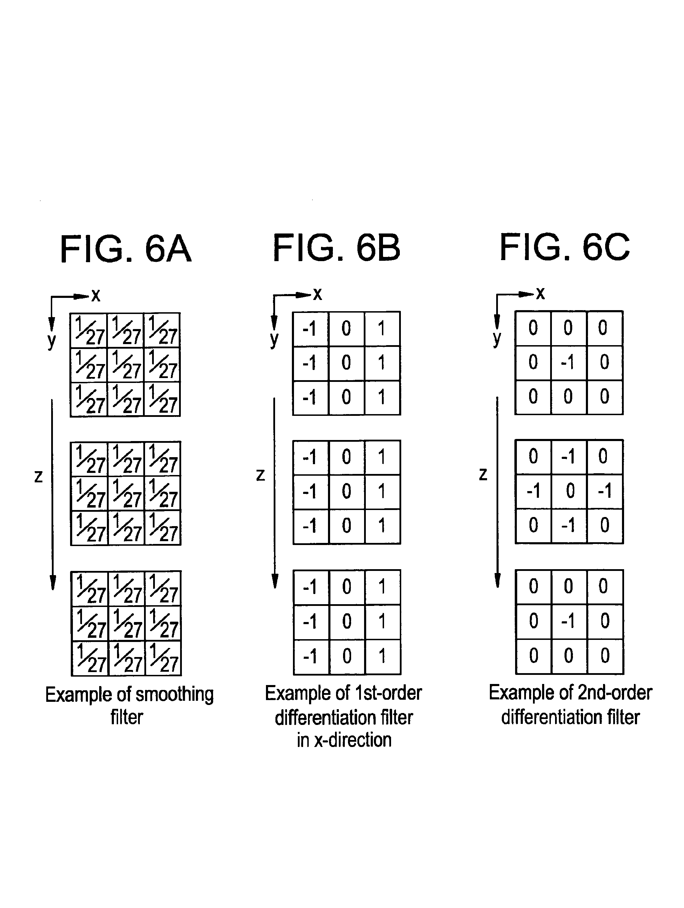

The characteristic of the filtering is determined by the coefficient values in the three-dimensional spatial filter and their positions. Figure 6 shows an example of the coefficient values in the three-dimensional spatial filtering and their positions.

Figure 6(a) shows a case in which identical coefficients, 1/27, are disposed in all the pixel positions. Such a coefficient setting achieves averaging, i.e., low-pass filtering. Figure 6(b) shows a case in which coefficients at pixel positions along the y-direction in the center are all defined as zero, coefficients at pixel positions along the y-direction on one side are all defined as minus one, and those on the other side are all defined as one. This achieves first-order differentiation, i.e., edge enhancement, in the x-direction. Figure 6(c) shows a case in which a central pixel is defined as zero, coefficients neighboring it in the x-, y- and z-directions are defined as minus one, and other pixels are defined as zero. This achieves second-order differentiation.

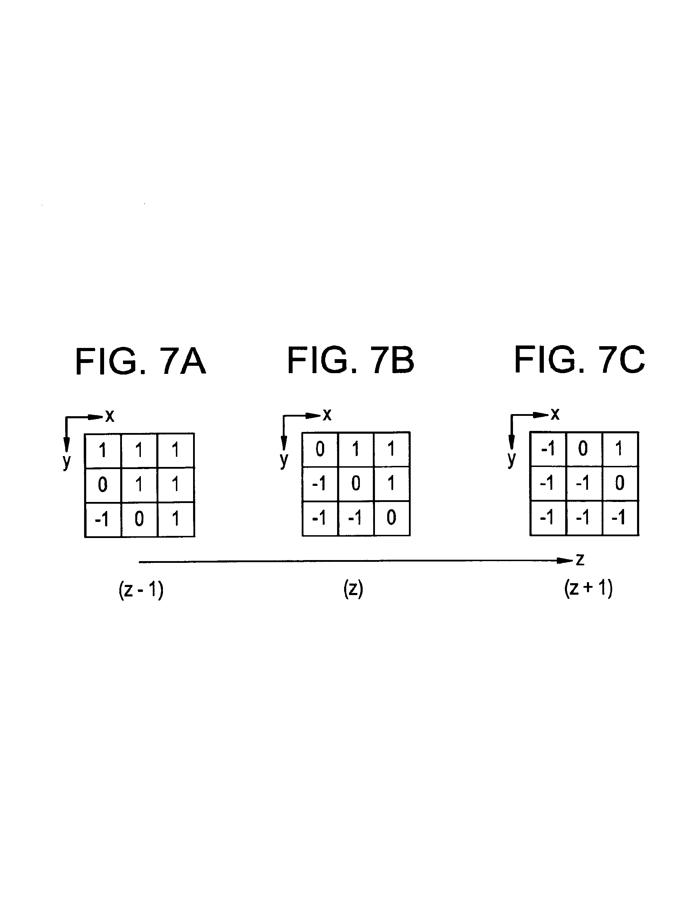

In the three-dimensional spatial filtering, it is also possible to set coefficients for effecting edge enhancement in a direction oblique with respect to all of the x-, y-and z-axes. Figure 7 shows an example of such a coefficient setting. Figures 7(a), (b) and (c) show an exemplary coefficient setting of three layers of x-y spatial filter coefficients, respectively, arranged in the z-axis in the three-dimensional spatial filtering.

In the first layer (z - 1), as shown in (a), coefficients of one are positioned along a diagonal direction declining toward the right, coefficients of one are positioned in an entire right portion with respect to the diagonal direction, coefficients of zero are positioned in a left portion except a corner, and a coefficient of minus one is positioned at the corner.

In the second layer (z), as shown in (b), coefficients of zero are positioned along a diagonal direction declining toward the right, coefficients of one are positioned in an entire right portion with respect to the diagonal direction, and coefficients of minus one are positioned in an entire left portion.

In the third layer (z + 1), as shown in (c), coefficients of minus one are positioned along a diagonal direction declining toward the right, coefficients of minus one are positioned in an entire left portion with respect to the diagonal direction, coefficients of zero are positioned in a right portion except a corner, and a coefficient one is positioned at the corner.

By such coefficient arrangement, an edge lying in a diagonal direction declining toward the "lower-right" and in a direction obliquely crossing the three-dimensional spatial filter from the first layer to the third layer can be enhanced.

The image processing section 104 conducts filtering while changing the coefficient setting for the three-dimensional spatial filter according to the property of the pixel value or the pixel value itself of a pixel-of-interest. The property of the pixel value for the three-dimensional spatial filter includes the pixel value of the pixel-of-interest for the three-dimensional spatial filter. Other properties include the average value, maximum value, minimum value, median value, and the like, of the pixel-of-interest and its neighboring pixels.

Moreover, the property of the pixel value may be a value given by each of the following equations:

$$\max|G(x, y, z) - G(x - i, y - j, z - k)|;$$
$$where$$
$$i = 1, -1;$$
$$j = 1, -1; and \qquad (1)$$
$$k = 1, -1,$$

$$\max\{G(x, y, z) - G(x - i, y - j, z - k)\}^2;$$
$$where$$
$$i = 1, -1;$$
$$j = 1, -1; and \qquad (2)$$
$$k = 1, -1,$$

$$\min \left| G(x, y, z) - G(x - i, y - j, z - k) \right|;$$
$$where$$
$$i = 1, -1;$$
$$j = 1, -1; and$$
$$k = 1, -1,$$

(3)

$$\min \left\{ G(x, y, z) - G(x - i, y - j, z - k) \right\}^2;$$
$$where$$
$$i = 1, -1;$$
$$j = 1, -1; and$$
$$k = 1, -1,$$

(4)

$$\mathrm{mod} \left| G(x, y, z) - G(x - i, y - j, z - k) \right|;$$
$$where$$
$$i = 1, -1;$$
$$j = 1, -1; and$$
$$k = 1, -1, and$$

(5)

$$\mathrm{mod} \left\{ G(x, y, z) - G(x - i, y - j, z - k) \right\}^2;$$
$$where$$
$$i = 1, -1;$$
$$j = 1, -1; and$$
$$k = 1, -1.$$

(6)

Equation (1) is an embodiment representing the maximum value of the absolute values of the differences between pixel values of the pixel-of-interest for the three-dimensional spatial filtering and other pixels.
Equation (2) represents the maximum value of the squares of the differences between pixel values of the pixel-of-interest for the three-dimensional spatial filtering and other pixels.
Equation (3) represents the minimum value of the absolute values of the differences between pixel values of the pixel-of-interest for the three-dimensional spatial filtering and other pixels.

Equation (4) represents the minimum value of the squares of the differences between pixel values of the pixel-of-interest for the three-dimensional spatial filtering and other pixels.

Equation (5) represents the median value of the absolute values of the differences between pixel values of the pixel-of-interest for the three-dimensional spatial filtering and other pixels.

Equation (6) represents the median value of the squares of the differences between pixel values of the pixel-of-interest for the three-dimensional spatial filtering and other pixels.

Moreover, another example of the property of the pixel value in the three-dimensional spatial filtering may be represented by the standard deviation. Exemplary indicators of the property other than the standard deviation include a value given by each of the following equations:

$$\sum \left| G(x,y,z) - G(x-i,y-j,z-k) \right|;$$
$$where$$
$$i = 1, -1;$$
$$j = 1, -1; \, and \qquad\qquad (7)$$
$$k = 1, -1, \, and$$

$$\sum \left\{ G(x,y,z) - G(x-i,y-j,z-k) \right\}^2;$$
$$where$$
$$i = 1, -1;$$
$$j = 1, -1; \, and \qquad\qquad (8)$$
$$k = 1, -1.$$

Equation (7) represents the sum of the absolute values of the differences between pixel values of the pixel-of-interest for the three-dimensional spatial filtering and other pixels.

Equation (8) represents the square sum of the differences between pixel values of the pixel-of-interest for the three-dimensional spatial filtering and other pixels.

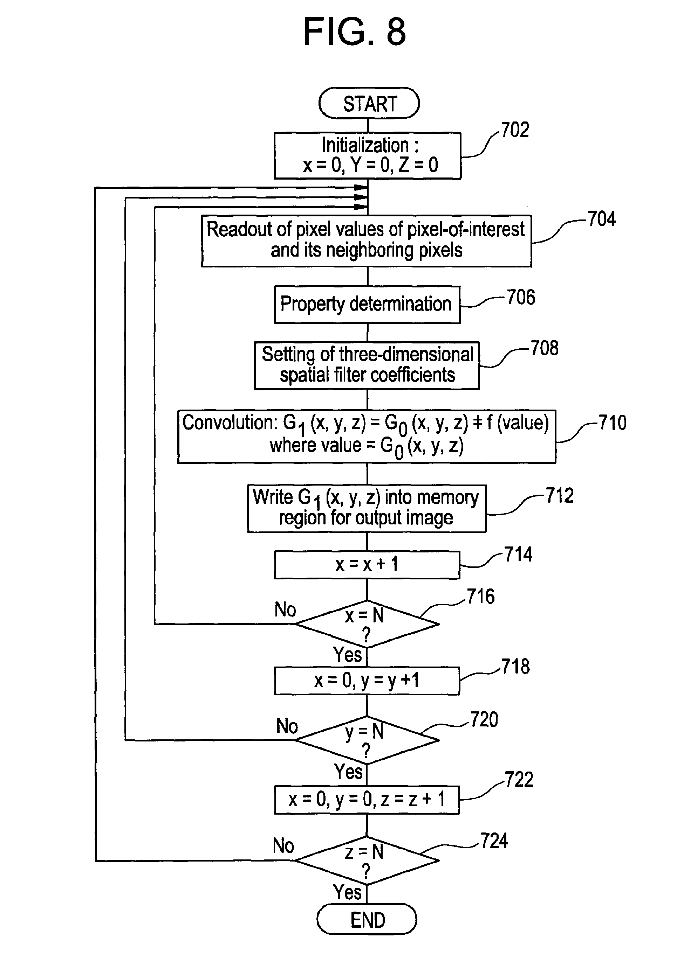

Figure 8 shows a flow chart of an operation of the image processing section 104. The operation of the image processing section 104 is substantially an operation of the CPU 402. As shown, the three-dimensional spatial filter starts scanning.

At Step 702, initialization is first conducted. By this step, the initial position of the pixel-of-interest is defined as x = 0, y = 0 and z = 0.

Next, at Step 704, pixel values of the pixel-of-interest and its neighboring pixels are read from the three-dimensional image.

Next, at Step 706, property determination is conducted. The property to be employed is determined beforehand as any one of the pixel value of the pixel-of-interest, maximum value of neighborhood, minimum value of neighborhood and the like, as described above.

For example, if the property specified by the user is the pixel value of the pixel-of-interest for the three-dimensional spatial filter, a value G0(x, y, z) in the input image is read. Although the following description will be made on a case in which the pixel value of the pixel-of-interest for the three-dimensional spatial filter is employed as the property, the same applies to other cases.

Next, at Step 708, coefficient setting for the three-dimensional spatial filter is conducted. The CPU 402 is an embodiment of the coefficient adapting means of the present invention. The coefficient setting for the three-dimensional spatial filter is achieved according to the property determined at Step 706, i.e., according to the pixel value of the pixel-of-interest, for example. The pixel value of the pixel-of-interest will be sometimes referred to as the pixel-of-interest value hereinbelow.

The coefficient setting is achieved in the following manner, for example. When the three-dimensional image is comprised of a plurality of tomographic images acquired by an X-ray CT apparatus and the three-dimensional spatial filter is a low-pass filter, the coefficients are set so that the strength of filtering is greater for the larger pixel-of-interest value and is smaller for the smaller pixel-of-interest value. In other words, the coefficients are set so that averaging is strengthened for the larger pixel-of-interest value and is weakened for the smaller pixel-of-interest value.

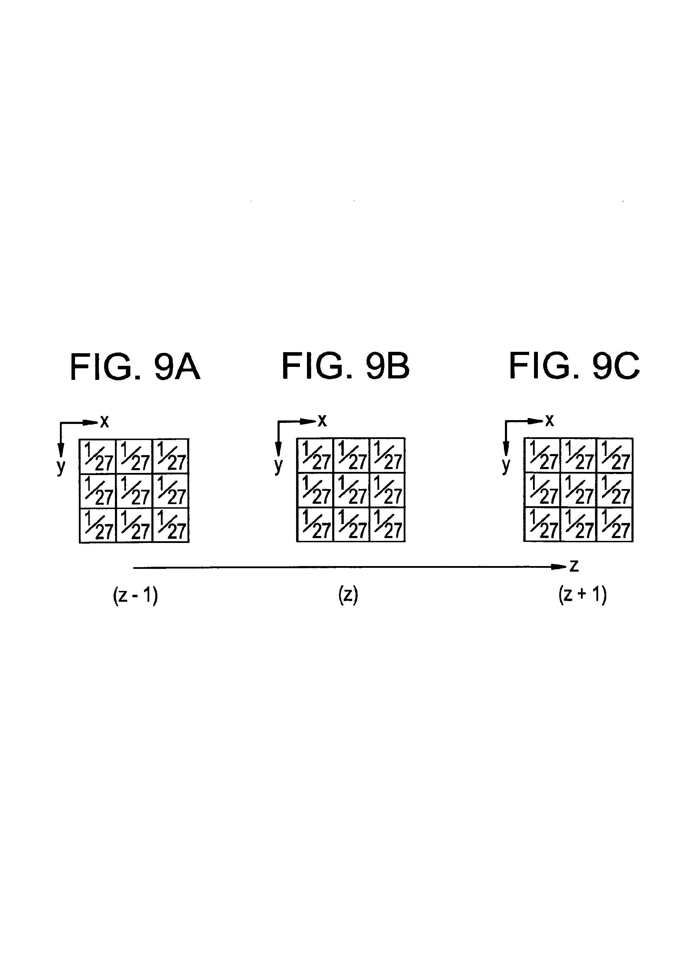

Figure 9 shows an exemplary coefficient setting for the strong low-pass filtering. As shown, all the pixel positions in the three-dimensional spatial filter are assigned a coefficient of 1/27. By such a coefficient setting having the sum of the coefficients normalized to "1", pixel values of the pixel-of-interest and its neighboring pixels all convoluted by the same weight are obtained. This simple averaging corresponds to the stronger low-pass filtering.

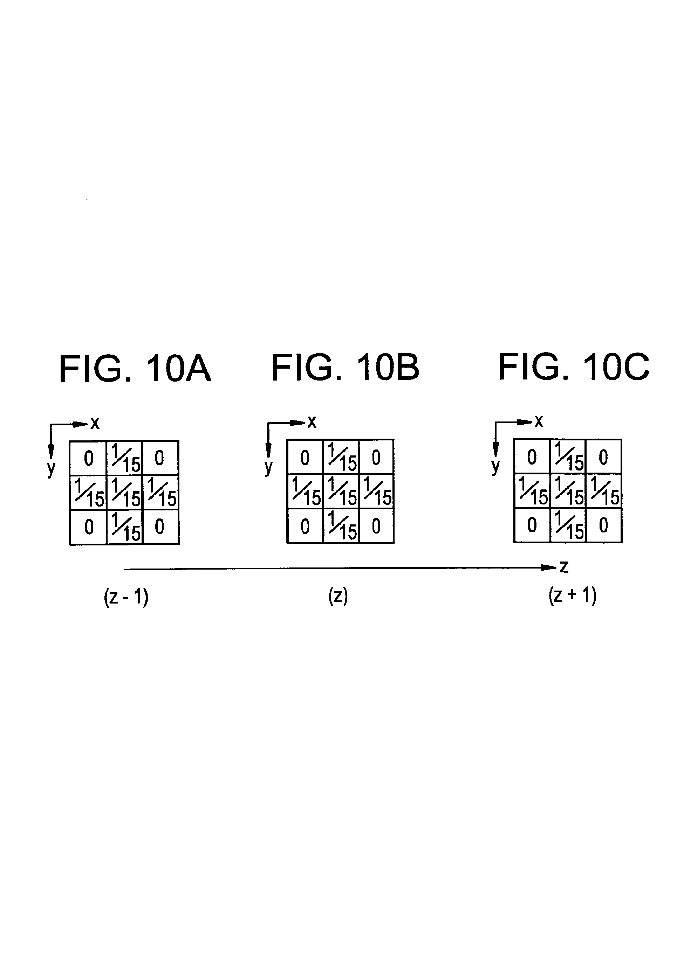

Figure 10 shows an exemplary coefficient setting for the weak low-pass filtering. As shown, the central pixel position and vertically and horizontally neighboring pixel positions in each layer of the x-y plane of the three-dimensional spatial filter are assigned a coefficient of 1/15, and pixels in the remaining portion are assigned a coefficient of zero. By such a coefficient setting having the sum of the coefficients normalized to "1", the degree of averaging is reduced by an amount corresponding to pixel values in a portion having the coefficient of zero that are excluded from the convolution.

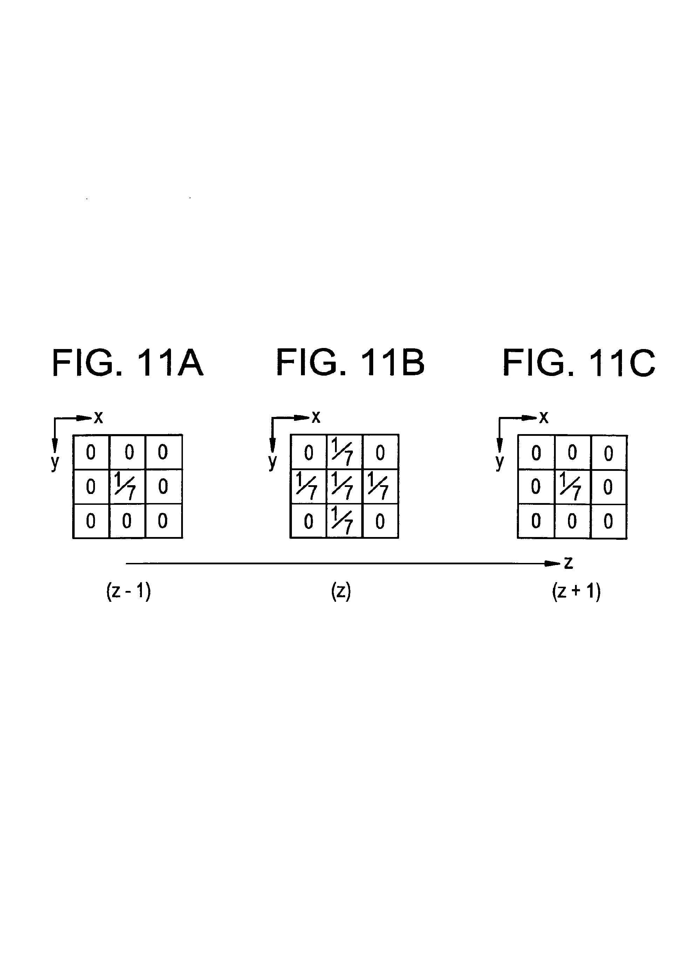

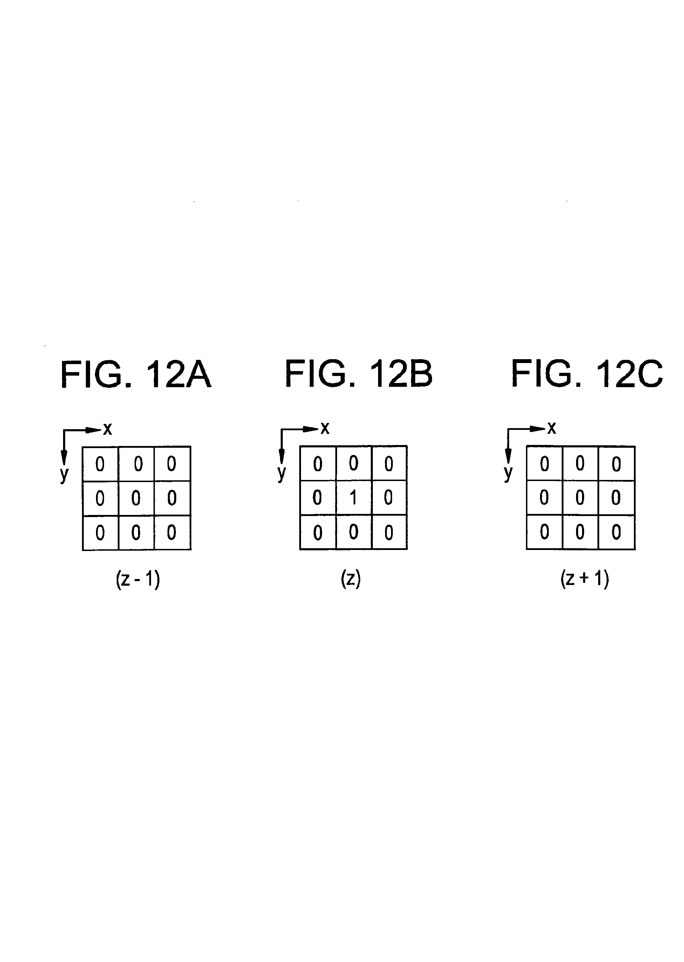

The larger the number of pixel positions assigned a coefficient of zero, the smaller the degree of averaging; and as shown in Figures 11 (a) and (c), when only the central pixel is assigned a coefficient of 1/7 and the other pixels are assigned zero in the first and third layers, yet weaker averaging can be achieved. Moreover, when only the pixel-of-interest is assigned a coefficient of one and the remaining pixels are all assigned zero as shown in Figure 12, no change is effected.

The setting of coefficients according to the pixel-of-interest value is conducted by a predetermined algorithm or calculation of an equation. Alternatively, it is possible to store beforehand a table representing correspondence of the pixel-of-interest value and the coefficient and conduct the coefficient setting with reference to the table.

Next, at Step 710, convolution is conducted. The convolution is processing of conducting convolution on a pixel scanned by the three-dimensional spatial filter having the coefficients defined as described above, with such a three-dimensional spatial filter. The result of the convolution of the pixel-of-interest and its neighboring pixels with the three-dimensional spatial filter gives a three-dimensional spatial filtering output value for the pixel-of-interest.

Tomographic images captured by an X-ray CT apparatus have larger noise in a portion of a larger pixel value and smaller noise in a portion of a smaller pixel value as described earlier; and therefore, by strengthening smoothing for a larger pixel-of-interest value and weakening smoothing for a smaller pixel-of-interest value as described above, low-pass filtering for a plurality of tomographic images can be suitably achieved throughout the images.

Unlike the tomographic images captured by the X-ray CT apparatus, a three-dimensional image such as that captured by an MRI apparatus, for example, which has a smaller noise in a portion of a larger pixel value and larger noise in a portion of a smaller pixel value, is subjected to, contrary to the above, weaker smoothing in a portion of a larger pixel-of-interest value and stronger smoothing in a portion of a smaller pixel-of-interest value, whereby low-pass filtering can be suitably achieved throughout the image.

In first- or second-order differentiation, for example, in addition to the low-pass filtering, suitable processing can be achieved throughout a three-dimensional image by setting coefficients as described above.

Next, at Step 712, a pixel value is written into an output image. The pixel value written constitutes a three-dimensional filtered output image.

Next, at Step 714, x is set as x = x + 1. This moves the position of the pixel-of-interest by one in the x-direction. Next, at Step 716, a decision is made as to whether x = N. N is the number of pixels in the input image in the x-direction. If the decision results in No, the process goes back to Step 704 and sequentially conducts processing of Steps 704 - 716. This process is repeated until x = N is reached.

When x = N is reached, x and y are set as x = 0 and y = y + 1 at Step 718. This moves the position of the pixel-of-interest by one in the y-direction. Next, at Step 720, a decision is made as to whether y = N. N is the number of pixels in the input image in the y-direction.

If the decision results in No, the process goes back to Step 704 and processing at Steps 704-716 are repeated until x = N is reached, y is incremented by one each time x = N is reached, and the process is repeated until y = N is reached.

When y = N is reached, x, y and z are set as x = 0, y = 0, and z = z + 1 at Step 722. This moves the position of the pixel-of-interest by one in the z-direction. Next, at Step 724, a decision is made as to whether z = M. M is the number of pixels in the input image in the z-direction.

If the decision results in No, the process goes back to Step 704 and processing at Steps 704 - 716 are repeated until x = N is reached, y is incremented by one each time x = N is reached, the process is repeated until y = N is reached, z is incremented by one each time y = N is reached, and the process is repeated until z = M is reached. When z = M is reached, the three-dimensional spatial filtering is completed.

**EP 1 388 817 A1**

For the sake of good order, various aspects of the invention are set out in the following clauses:-

1. A three-dimensional spatial filtering apparatus for conducting filtering on a three-dimensional image by a three-dimensional spatial filter, comprising a coefficient adapting device for changing coefficients of said three-dimensional spatial filter according to a property of a pixel value in said three-dimensional image.

2. The three-dimensional spatial filtering apparatus of clause 1, wherein said property is a pixel value of a pixel-of-interest in the three-dimensional image convoluted with the filter.

3. The three-dimensional spatial filtering apparatus of clause 1, wherein said property is an average value of pixel values of the pixel-of-interest in the three-dimensional image convoluted with the filter and its neighboring pixels.

4. The three-dimensional spatial filtering apparatus of clause 1, wherein said property is a maximum value of pixel values of the pixel-of-interest in the three-dimensional image convoluted with the filter and its neighboring pixels.

5. The three-dimensional spatial filtering apparatus of clause 1, wherein said property is a minimum value of pixel values of the pixel-of-interest in the three-dimensional image convoluted with the filter and its neighboring pixels.

6. The three-dimensional spatial filtering apparatus of clause 1, wherein said property is a median value of pixel values of the pixel-of-interest in the three-dimensional image convoluted with the filter and its neighboring pixels.

7. The three-dimensional spatial filtering apparatus of clause 1, wherein said property is a maximum value of absolute values of differences between a pixel value of the pixel-of-interest in the three-dimensional image convoluted with the filter and pixel values of its neighboring pixels.

8. The three-dimensional spatial filtering apparatus of clause 1, wherein said property is a maximum value of squares of differences between a pixel value of the pixel-of-interest in the three-dimensional image convoluted with the filter and pixel values of its neighboring pixels.

9. The three-dimensional spatial filtering apparatus of clause 1, wherein said property is a minimum value of absolute values of differences between a pixel value of the pixel-of-interest in the three-dimensional image convoluted with the filter and pixel values of its neighboring pixels.

10. The three-dimensional spatial filtering apparatus of clause 1, wherein said property is a minimum value of squares of differences between a pixel value of the pixel-of-interest in the three-dimensional image convoluted with the filter and pixel values of its neighboring pixels.

11. The three-dimensional spatial filtering apparatus of clause 1, wherein said property is a median value of absolute values of differences between a pixel value of the pixel-of-interest in the three-dimensional image convoluted with the filter and pixel values of its neighboring pixels.

12. The three-dimensional spatial filtering apparatus of clause 1, wherein said property is a median value of squares of differences between a pixel value of the pixel-of-interest in the three-dimensional image convoluted with the filter and pixel values of its neighboring pixels.

13. The three-dimensional spatial filtering apparatus of clause 1, wherein the coefficients of the three-dimensional spatial filter are adapted depending upon, as said property, a property of a pixel value of the pixel-of-interest in the three-dimensional image convoluted with the filter or its neighboring pixels.

14. The three-dimensional spatial filtering apparatus of clause 13, wherein a standard deviation of the pixel-of-interest in the three-dimensional image convoluted with the filter and its neighboring pixels is employed as an indicator of said property.

15. The three-dimensional spatial filtering apparatus of clause 13, wherein a sum of absolute values of differences between a pixel value of the pixel-of-interest in the three-dimensional image convoluted with the filter and pixel values of its neighboring pixels is employed as an indicator of said property.

16. The three-dimensional spatial filtering apparatus of clause 13, wherein a square sum of differences between a pixel value of the pixel-of-interest in the three-dimensional image convoluted with the filter and pixel values of its neighboring pixels is employed as an indicator of said property.

17. A three-dimensional spatial filtering method for conducting filtering on a three-dimensional image by a three-dimensional spatial filter, comprising the step of adapting coefficients of said three-dimensional spatial filter according to a property of a pixel value in said three-dimensional image.

18. The three-dimensional spatial filtering method of clause 17, wherein said property is a pixel value of a pixel-of-interest in the three-dimensional image convoluted with the filter.

19. The three-dimensional spatial filtering method of clause 17, wherein said property is an average value of pixel values of the pixel-of-interest in the three-dimensional image convoluted with the filter and its neighboring pixels.

20. The three-dimensional spatial filtering method of clause 17, wherein said property is a maximum value of pixel values of the pixel-of-interest in the three-dimensional image convoluted with the filter and its neighboring pixels.

## Claims

1. A three-dimensional spatial filtering apparatus for conducting filtering on a three-dimensional image by a three-dimensional spatial filter, comprising a coefficient adapting device for changing coefficients of said three-dimensional spatial filter according to a property of a pixel value in said three-dimensional image.

2. The three-dimensional spatial filtering apparatus of claim 1, wherein said property is a pixel value of a pixel-of-interest in the three-dimensional image convoluted with the filter.

3. The three-dimensional spatial filtering apparatus of claim 1, wherein said property is an average value of pixel values of the pixel-of-interest in the three-dimensional image convoluted with the filter and its neighboring pixels.

4. The three-dimensional spatial filtering apparatus of claim 1, wherein said property is a maximum value of pixel values of the pixel-of-interest in the three-dimensional image convoluted with the filter and its neighboring pixels.

5. The three-dimensional spatial filtering apparatus of claim 1, wherein said property is a minimum value of pixel values of the pixel-of-interest in the three-dimensional image convoluted with the filter and its neighboring pixels.

6. The three-dimensional spatial filtering apparatus of claim 1, wherein said property is a median value of pixel values of the pixel-of-interest in the three-dimensional image convoluted with the filter and its neighboring pixels.

7. A three-dimensional spatial filtering method for conducting filtering on a three-dimensional image by a three-dimensional spatial filter, comprising the step of adapting coefficients of said three-dimensional spatial filter according to a property of a pixel value in said three-dimensional image.

8. The three-dimensional spatial filtering method of claim 7, wherein said property is a pixel value of a pixel-of-interest in the three-dimensional image convoluted with the filter.

9. The three-dimensional spatial filtering method of claim 7, wherein said property is an average value of pixel values of the pixel-of-interest in the three-dimensional image convoluted with the filter and its neighboring pixels.

10. The three-dimensional spatial filtering method of claim 17, wherein said property is a maximum value of pixel values of the pixel-of-interest in the three-dimensional image convoluted with the filter and its neighboring pixels.

# FIG. 1

```
        102                          104                          106

  ┌──────────────┐          ┌──────────────┐          ╭──────────╮
  │    Image     │          │    Image     │   ┌────▶ │  Display │
  │  acquiring   │ ───────▶ │  processing  │───┘      │  section │
  │   section    │          │   section    │◀──┐      ╰──────────╯
  └──────────────┘          └──────────────┘   │
                                                │            108
                                                │    ┌──────────────┐
                                                └────│  Operating   │
                                                     │   section    │
                                                     └──────────────┘
```

# FIG. 2

104

```
        402              Bus
                         414              408
  ┌──────────┐            │        ┌──────────────┐
  │          │            │        │    Image     │
  │   CPU    │───────────┤        │    input     │◀──── (102)
  │          │            │        │  interface   │
  └──────────┘            │        └──────────────┘
        404              │
  ┌──────────┐            │                410
  │   Main   │            │        ┌──────────────┐
  │  memory  │───────────┤        │   Display    │
  │          │            │        │    output    │────▶ (106)
  └──────────┘            │        │  interface   │
        406              │        └──────────────┘
  ┌──────────┐            │                412
  │ External │            │        ┌──────────────┐
  │  memory  │───────────┤        │  Operation   │
  │          │            │        │    input     │◀──── (108)
  └──────────┘            │        │  interface   │
                                   └──────────────┘
```

FIG. 3

# FIG. 4

# FIG. 5

EP 1 388 817 A1

# FIG. 6A

Example of smoothing filter

# FIG. 6B

Example of 1st-order differentiation filter in x-direction

# FIG. 6C

Example of 2nd-order differentiation filter

14

# FIG. 7A  FIG. 7B  FIG. 7C

FIG. 7A  (z - 1)

FIG. 7B  (z)

FIG. 7C  (z + 1)

# FIG. 8

START

Initialization :
x = 0, Y = 0, Z = 0 — 702

Readout of pixel values of pixel-of-interest
and its neighboring pixels — 704

Property determination — 706

Setting of three-dimensional
spatial filter coefficients — 708

Convolution: $G_1(x, y, z) = G_0(x, y, z) \div f(value)$
where value = $G_0(x, y, z)$ — 710

Write $G_1(x, y, z)$ into memory
region for output image — 712

x = x + 1 — 714

x = N
? — 716
No

Yes

x = 0, y = y + 1 — 718

y = N
? — 720
No

Yes

x = 0, y = 0, z = z + 1 — 722

z = N
? — 724
No

Yes

END

# FIG. 9A     FIG. 9B     FIG. 9C

(z - 1)                    (z)                    (z + 1)

# FIG. 10A

| | | |
|---|---|---|
| 0 | $1/15$ | 0 |
| $1/15$ | $1/15$ | $1/15$ |
| 0 | $1/15$ | 0 |

(z - 1)

# FIG. 10B

| | | |
|---|---|---|
| 0 | $1/15$ | 0 |
| $1/15$ | $1/15$ | $1/15$ |
| 0 | $1/15$ | 0 |

(z)

# FIG. 10C

| | | |
|---|---|---|
| 0 | $1/15$ | 0 |
| $1/15$ | $1/15$ | $1/15$ |
| 0 | $1/15$ | 0 |

(z + 1)

# FIG. 11A   FIG. 11B   FIG. 11C

(z - 1)   (z)   (z + 1)

EP 1 388 817 A1

# FIG. 12A   FIG. 12B   FIG. 12C

| | 0 | 0 | 0 |
| | 0 | 0 | 0 |
| | 0 | 0 | 0 |

(z - 1)

| | 0 | 0 | 0 |
| | 0 | 1 | 0 |
| | 0 | 0 | 0 |

(z)

| | 0 | 0 | 0 |
| | 0 | 0 | 0 |
| | 0 | 0 | 0 |

(z + 1)

**European Patent Office**

**EUROPEAN SEARCH REPORT**

Application Number

EP 03 25 4892

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | CIUC M ET AL: "Adaptive-neighborhood speckle removal in multitemporal synthetic aperture radar images" APPLIED OPTICS, 10 NOV. 2001, OPT. SOC. AMERICA, USA, vol. 40, no. 32, pages 5954-5966, XP002256732 ISSN: 0003-6935 * the whole document * | 1-10 | G06T5/20 |
| X | KIM J-S ET AL: "Adaptive 3-D median filtering for restoration of an image sequence corrupted by impulse noise" SIGNAL PROCESSING. IMAGE COMMUNICATION, ELSEVIER SCIENCE PUBLISHERS, AMSTERDAM, NL, vol. 16, no. 7, April 2001 (2001-04), pages 657-668, XP004232131 ISSN: 0923-5965 | 1,7 | |
| A | * the whole document * | 2-6,8-10 | |
| A | FREEMAN W T ET AL: "Steerable filters for early vision, image analysis, and wavelet decomposition" PROCEEDINGS OF THE INTERNATIONAL CONFERENCE ON COMPUTER VISION. OSAKA, DEC. 4 - 7, 1990, LOS ALAMITOS, IEEE COMP. SOC. PRESS, US, vol. CONF. 3, 4 December 1990 (1990-12-04), pages 406-415, XP010020084 ISBN: 0-8186-2057-9 * the whole document * | 1-10 | TECHNICAL FIELDS SEARCHED (Int.Cl.7) G06T |
| A | US 4 571 635 A (NELSON OWEN L ET AL) 18 February 1986 (1986-02-18) * the whole document * | 1-10 | |

-/--

The present search report has been drawn up for all claims

| Place of search | Date of completion of the search | Examiner |
|---|---|---|
| MUNICH | 6 October 2003 | Herter, J |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**European Patent Office**

## EUROPEAN SEARCH REPORT

Application Number

EP 03 25 4892

### DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| A | WISCHERMANN G: "MEDIANFILTERUNG VON VIDEOSIGNALEN. \EINE WIRKUNGSVOLLE ALTERNATIVE" FERNSEH UND KINOTECHNIK, VDE VERLAG GMBH. BERLIN, DE, vol. 44, no. 12, 1990, pages 665-670,672, XP000177673 ISSN: 0015-0142 * the whole document * ----- | 1-10 | |
| | | | **TECHNICAL FIELDS SEARCHED** (Int.Cl.7) |

The present search report has been drawn up for all claims

| Place of search | Date of completion of the search | Examiner |
|---|---|---|
| MUNICH | 6 October 2003 | Herter, J |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 03 25 4892

This annex lists the patent family members relating to the patent documents cited in the above-mentioned European search report.
The members are as contained in the European Patent Office EDP file on
The European Patent Office is in no way liable for these particulars which are merely given for the purpose of information.

06-10-2003

| Patent document cited in search report | Publication date | Patent family member(s) | Publication date |
|---|---|---|---|
| US 4571635 A | 18-02-1986 | DE 3582258 D1 | 02-05-1991 |
| | | EP 0153167 A2 | 28-08-1985 |
| | | JP 2551552 B2 | 06-11-1996 |
| | | JP 60192482 A | 30-09-1985 |

For more details about this annex : see Official Journal of the European Patent Office, No. 12/82